# EUROPEAN PATENT SPECIFICATION

(11) **EP 1 830 659 B1**
(45) Date of publication and mention of the grant of the patent: **26.09.2018**
(21) Application number: 05816260.3
(22) Date of filing: 09.12.2005
(51) Int. Cl.: A23C 13/14, A23C 9/154

(54) **MEDIUM-FAT CREAM**
HALBFETTSAHNE
CRÈME DEMI-GRASSE

(30) Priority: 10.12.2004 EP 04078350
(43) Date of publication of application: 12.09.2007
(73) Proprietor: FrieslandCampina Nederland B.V., 3818 LE Amersfoort (NL)
(72) Inventor: DONKERS, Henrica, Martina, Maria, 5427 JL Boekel (NL)
(74) Representative: Nederlandsch Octrooibureau
(86) International application number: PCT/NL2005/050072
(87) International publication number: WO 2006/038807

(56) References cited:
- EP-A- 0 807 385
- EP-A- 1 226 761
- EP-A- 1 369 041
- EP-A- 1 481 591
- WO-A1-2004/071215
- US-A- 3 370 955
- US-A- 4 647 465
- US-A- 5 518 752
- Lactic Acid Ester: "PRODUCT DESCRIPTION -PD 596-12.9EN Material no. 052566 GRINDSTED LACTEM P 22 KOSHER", , 28 September 2007 (2007-09-28), XP055311569, Retrieved from the Internet: URL:http://www.bioenzym.pl/index.php?optio n=com_content&view=article&id=48&Itemid=52 &jsmallfib=1&dir=JSROOT&download_file=JSRO OT/GRINDSTED Lactem P 22 Kosher 052566.pdf [retrieved on 2016-10-18]
- Cimpa: "Panodan 165CP", , 30 April 2013 (2013-04-30), XP055311575, Retrieved from the Internet: URL:http://www.cimpaltda.com/modulo/quimic os/panodan 165 CP kosher.pdf [retrieved on 2016-10-18]

## Description

The invention pertains to a cream having a reduced fat content and to a process of preparing such cream.

### Background

Cream or whipped cream is appreciated all over the world as an indulgent food, either as an attractive "finish" on or in foodstuffs like desserts, fruits, drinks, ice cream, cake, pastry and the like, or to be consumed as such. Whipped cream can be considered as a fat-based foamed food product. Firmness, mouthfeel, (foam) stability and whipping ability are some of the important properties that determine the quality of the whipped product. It is known that these properties are highly dependent of the fat level of cream, which is normally around 35-40 % w/w fat for industrially produced dairy cream types. Whipping of cream types having this fat level mostly results in a satisfactory stability, mouthfeel and overrun of the whipped product.

For various reasons (e.g. health concerns, cost price issues) the need developed for a cream type with a lower milk fat level. In the art, to meet these requirements, whipping creams were developed in which a part of the milk fat is replaced by vegetable fat, and/or in which the milk fat level was lowered to some extent. However, this cannot be done easily without compromising the functional and organoleptic properties of the final, whipped cream product.

GB 2211393 describes a whipped cream having a slightly reduced (milk) fat content of 25-30%, and containing 0.15 wt.% to 0.33 wt.% of an emulsifier of the saturated monoglyceride and diglyceride types, in particular a glycerol monolactate-monostearate.

WO 95/06413 (US 6,497,914) discloses a whipped cream containing 15-30% fat, and low levels (<1%) of emulsifiers such as diacetyl-tartrate monoglyceride or other (saturated) emulsifiers. The fat is a mixture of lauric fat and 2-unsaturated-1,3-disaturated (SUS) triglycerides.

WO 85/02979 (US 4,647,465) discloses whippable cream having a fat content between 20 and 30% of fat and 0.2-0.4% of an emulsifier mixture. In particular, this document discloses a cream containing 25% fat en 0.3% of an emulsifier consisting of 80% of distilled monoglycerides and 20% of hydrogenated soya oil, wherein the emulsifier contains 71% of saturated and 29% of unsaturated fatty acids.

US 3,370,955 discloses a coagulating cream win which a mixture of stabilisers and emulsifiers is incorporated prior to coagulation using an acid. In an example, 0.25 % of a mixture of unspecified mono- and diglycerides of unsaturated fatty acids was used in a raw cream of 18% or more butterfat.

Lowering the fat level (more specifically the milk fat level) even further, normally results in insufficient performance of the cream with respect to stability and mouthfeel.

WO 02/058477 discloses a foamable cream based on pure milk fat and containing about 1% of saturated emulsifier and about 0.015% of an unsaturated monoglyceride emulsifier for a 10.6% fat cream, and containing about 2.5% saturated emulsifier and about 0.05% of an unsaturated monoglyceride emulsifier for a 30% fat cream. The cream is intended to be whipped by the consumer and to be pourable, e.g. as a milk shake or for a cappuccino, and is not suitable as a firm cream for decoration purposes.

EP-A 1 226 761 describes a milk product containing from 0 to 30% fat, from 5 to 23% solid non fat, other ingredients and water, wherein said product can be foamed at room temperature either by shaking or with a foaming device, said product containing further a mixture of three emulsifiers and a foam stabilizer.

WO 2004/071215 relates to a composition, and a method for the production thereof, comprising at least one kind of vegetable fat, at least one humectant, at least one filler, at least one stabilizer, at least one agent for improving the rheological and caloric properties of the composition, and water.

So far, no solution is available to prepare a whippable cream type with a very low fat content, which equals the physical and/or organoleptic properties of medium- or high fat creams, wherein the whipped cream remains stable during prolonged storage times.

### Description of the invention

It was found that the fat content of whipped cream can be lowered by using a specific unsaturated emulsifier in the cream composition, while maintaining storage stability of the whipped cream. Hence, the invention pertains to a cream composition having a fat content of between 12 and 17 wt.% and containing a mono- and/or di-glyceride emulsifier, characterised in that at least 30% of the total fatty acid content of the emulsifier are unsaturated fatty acids. The cream contains between 0.1 and 2.0 wt.% of a mono- and/or di-glyceride containing at least one unsaturated fatty acid group.

### The emulsifier

The emulsifier to be used according to the invention is an organic compound having at least one unsaturated fatty acid group, and at least one free hydroxyl group. The hydroxyl group may be a polyolic (e.g. glycerolic) hydroxyl group, or a hydroxyl group as a fatty acid substituent, such as a lactate or tartrate group. The unsaturated fatty acid group has at least 12, preferably at least 16 carbon atoms and can be selected from common unsaturated fatty acids such as palmitoleic (16:1), oleic (18:1), linoleic (18:2), linolenic (18:3), gadoleic (20:1), etc. and the isomeric, conjugated and/or trans-isomeric analogues and higher homologues. Although cis unsaturated fatty acids are preferred, trans fatty acids may also be present in the unsaturated emulsifiers. Several types of emulsifiers are effective for the purpose of the invention, however, it is preferred that the emulsifier is of an essentially non-ionic type. In particular, ionic emulsifiers of the phosphatidyl types (phosphatidyl choline and the like), which are major components in lecithins, are not preferred.

Preferably, the emulsifier is a monoglyceride, i.e. glycerol in which one hydroxyl group is esterified with an unsaturated fatty acid as described above. It may also be a monoglyceride derivative, in which one of the free hydroxyl groups is esterified with a small and/or relatively polar carboxylic acid such as acetic acid or lactic acid, or di- or tricarboxylic acid such as tartaric acid or citric acid and derivatives thereof such as diacetyl tartaric acid. Such monoglyceride derivatives are comprised in the definition of monoglycerides for the purpose of the invention. The lactic acid esters were found to be very suitable according to the invention.

Although less preferentially, the emulsifier may also be a diglyceride, i.e. glycerol in which two hydroxyl groups are esterified with unsaturated fatty acids as described above, or with one saturated and one unsaturated fatty acid.

Thus, a very suitable group of glycerol-derived emulsifiers of the invention is a derivative wherein one glycerolic hydroxyl function (F1) is esterified with an unsaturated C12+ acyl group, one glycerolic hydroxyl function (F2) is free or etherified or esterified with any organic group, and the third glycerolic hydroxyl function (F3) is free. Herein, the group at F2 may be long-chain (C16 or higher), medium-chain (C9-C15) or short-chain (C8 or lower), saturated or unsaturated, non-substituted or substituted with hydroxyl, carboxyl, acyl, etc. Preferred ones are those having a free hydroxyl group at F2, or are esterified at F2 with a long-chain unsaturated or a short-chain hydroxyl-substituted (such as lactyl) acyl group.

A second group is a derivative wherein F1 is esterified with an unsaturated C12+ acyl group, F2 is etherified or esterified with any organic group as described above, and F3 is esterified with a short-chain hydroxyl-substituted group, such as lactyl or citryl.

It is noted that F1, F2, and F3 do not denote specific positions of the glycerol moiety, e.g. F1 may be in a terminal or a central position.

Instead of or in addition to glycerol-derived emulsifiers, other polyol-derived emulsifiers can be used, such as those derived from propylene glycol, erythritol, threitol, pentaerythritol, xylitol, sorbitol, sorbitan, etc. and their isomers. Mixtures of different unsaturated emulsifier compounds are also suitable.

The amount of unsaturated emulsifier, i.e. emulsifier containing at least one unsaturated C12+ group, is between 0.06 and 2.0 wt.%, or between 0.06 and 1.0 or between 1.0 and 2.0 of the total cream composition. A preferred minimum is from 0.1%, more preferred from 0.15% upwards or above, even more preferred at least 0.2 wt.%. Amounts above 2.0 wt.% do not present additional advantages, and a preferred upper limit is 1.5 wt.%, more preferred up to 1.0 wt.%, most preferably up to 0.8 wt.%. Best overall results are obtained with amounts from 0.25 up to 0.6 wt.% or even 0.8 wt.% for (non-lactylated) monoglycerides and from 0.15 up to 0.4 wt.% or even up to 0.6 wt.% for lactylated monoglycerides.

In addition to the unsaturated emulsifiers, saturated emulsifiers may also be present, e.g. glycerol derivatives containing a saturated C12+ fatty acid group at F1, any saturated group or a free hydroxyl at F2 and a hydroxyl at F3. The amount of such saturated emulsifiers may be from 0 to 1.5 wt.% of the composition, e.g. from 0.1 to 1.0 wt.%. Higher amounts are not excluded, but these do not contribute to the desired emulsifying effect.

Mixtures can comprise mono- and diglycerides, saturated and unsaturated fatty acid glycerides. It is preferred, however, that mixtures consist for at least 50% of monoglycerides, as distinct from diglycerides, more preferably at least 70% by weight. It is also preferred that the mixtures contain at least 45% of unsaturated fatty acid residues on the weight basis of the total fatty acid content of the emulsifier.

For the purpose of the invention, the amounts of emulsifier to be used are based on 100% of the fatty acid residues of 12 or more carbon atoms being unsaturated. Thus, an emulsifier mixture in which the fatty acid residues of 12 and more carbon atoms comprise 75% unsaturated fatty acid residues and 25% saturated fatty acid residues, should be used in an amount of 100/75 times the amount specified.

Suitable emulsifiers are commercially available, such as Dimodan® P Pel/B, RT-T/B, UP/Bb, U/J, MO 90, Grindsted PS 217, Lactem R 100 or R 110, Acetem, all from Danisco, DK, and Myverol 18-35, 18-50, 18-92 of Quest (Kerry IE).

### The fat

The fat of the cream can be milk fat or a mixture of milk fat and vegetable fat or oil. Milk fat from cow, sheep, goat, buffalo and the like can be used. Vegetable fat or oil of the following types may be used: coconut fat, palm fat, palmkernel fat, mixtures thereof, all may be unhardened (natural), partially or totally hardened. It is preferred that milk fat constitutes at least 5 wt.% of the total composition, more preferably at least 8 wt.%, up to 20 wt.%. Preferably, at least 40% of the total fat is milk fat, more preferably at least half is milk fat and especially between 60% and 100%. The total fat content of the cream is between 12 and 17 wt.%

### Further components

The cream composition further contains conventional components making up a cream. These may or may not include sweeteners (sucrose, glucose, glucose syrup, lactose, artificial sweeteners), milk components (lactose, milk proteins, minerals), structuring aids such as hydrocolloids (thickeners), such as gelatine and carrageenan, water-binding agents such as guar gum, locust bean gum or other polysaccharides, vitamins, colorants, flavours etc. Proteins (milk proteins, e.g. casein, caseinates and or whey proteins; gelatine, etc.), 0.5-5 wt.%. Caseinates, e.g. sodium or potassium caseinates, are a preferred component for attaining desired structural properties, and these can advantageously be used at a level of between 0.02 and 1 wt.% of the total composition, especially between 0.04 and 0.6 wt.%. Polysaccharides (guar or other gums, carrageenans, xanthan, gellan, fibres, maltodextrins) can be used at total levels of e.g. 0.1-3 wt.% of the composition. A preferred ingredient blend which can be combined with a fat and optional further constituents to produce a cream contains at least the unsaturated emulsifier, polysaccharides such as guar, carrageenans, xanthan and/or gellan, and proteins, such as milk proteins and gelatine, and constitutes an embodiment of the invention. Preferred ranges for the weight ratio of unsaturated mono- and/or diglyceride to polysaccharides to gelatine to other proteins are 1 : 0.2-5 : 0.5-10 : 0.2-10, more preferred 1 : 0.5-2 : 1-5 : 1-5. If desired, 0.2-2 weight parts of saturated emulsifier per part of unsaturated emulsifier can be added, and optionally 0.2-5 weight parts of triglycerides.

### Production process

The cream can be produced in a manner known per se. For example, the dry ingredients are blended. Alternatively, some of the dry ingredients can be combined first into an "ingredient" blend in order to facilitate the handling of e.g. certain emulsifiers. The dry ingredients are added to the milk and cream mixture and dispersed using a mixer, e.g. a Becomixer.

A heating step can be carried out to hydrate and dissolve the dry components. Heating temperatures of between 65 and 85 °C can be used. Heating times up to 2 hours are normally sufficient. The mixture can be homogenised at a temperature between 65 and 85° C, at a pressure of e.g. about 100/20 bar. Homogenisation can be done upstream or downstream; upstream means homogenisation before heat treatment, downstream means homogenisation after heat treatment. Applied heat treatment includes pasteurisation or UHT treatment.

As a homogeniser, any homogeniser can be used, but preferably a single or double stage valve homogeniser is used (e.g. Rannie). The homogenised mixture is subsequently cooled to a temperature of between 2 and 10 °C, preferably about 7°C, in order to achieve a proper crystallisation of the fat, in particular the milk fat. Optionally, the mixture is stored overnight for 30 minutes to 48 hours preferably at a temperature between 1° and 7° C.

The cream mix is then whipped using an aerator to an overrun of 100 - 200 %; 120 - 180, preferably 140 - 160 %. The aerator can be of the type of a continuous aerator, which is commonly used in the continuous preparation of aerated products. Examples are e.g. a Mondomix (Mondomix, The Netherlands) or a Colette. Suitable gas types for whipping are nitrogen or air or mixtures of these gases. Whipping takes place at temperatures between 5 and 15 °C. Whipping conditions can be adjusted by the skilled person to obtain the desired overrun. The cream thus obtained can be applied directly on or in the food product to be decorated.

### Uses

The cream can be used as a decorative cream on desserts, fruits, drinks, ice cream, cake, pastry. The cream may by used as a decoration on top of a product, but may also be incorporated in e.g. a dessert in the form of a spiral, a swirl, a compartment, several (alternating) layers in a horizontal, vertical or angular mode, etc to obtain an attractive appearance. In such composite food products, the cream thus constitutes a distinct phase and preferably comprises between 5 and 80 wt.%, especially between 10 and 60%, more preferably between 30 and 50 % of the total food product, the remainder being any food product, usually non-creamy (non-aerated), preferably having a different colour. The food product will usually be packaged in single portions (about 100-200 g) or multiple portions (about 200-1000 g). The creams are particularly useful for the manufacture of ready-to-eat (RTE) food products.

### Examples

### Example I: Milk-based cream

The experiments were carried out on 10 litre scale. The components summarised in Table 1, other than the milk and cream, were dry blended. The blend was then thoroughly mixed with the milk and cream and the mixture homogenised at 80°C and 100/20 bar, pasteurised at 90 °C, cooled to 7 °C, stored overnight at 7 °C and whipped to an overrun of 150 % using a Mondomix type A 05.

**Table 1**

| *Wt %* | | *Ref 1.* | *Ref. 2* | *Ex. IA* | *Ex. IB* | *Ex. IC* | *Ex. ID* | *Ex. IE* |
|---|---|---|---|---|---|---|---|---|
| Milk cream (40% fat) | | 51.9 | 36.9 | 36.9 | 36.9 | 36.9 | 46.9 | 46.9 |
| Skim milk | | 39.0 | 54.0 | 53.4 | 53.4 | 53.8 | 43.7 | 43.7 |
| Saccharose | | 8.0 | 8.0 | 8.0 | 8.0 | 8.0 | 8.0 | 8.0 |
| Gelatine 270 bloom | | 0.6 | 0.6 | 0.65 | 0.60 | 0.65 | 0.65 | 0.70 |
| Carrageenan | | 0.2 | 0.2 | 0.19 | 0.18 | 0.19 | 0.19 | 0.20 |
| Guar gum | | 0.15 | 0.15 | 0.17 | 0.15 | 0.17 | 0.17 | 0.18 |
| Lactem P 22 (1) | | 0.2 | 0.2 | | | | | |
| P Pel B (2) | | | | 0.66 | 0.8 | | 0.4 | 0.4 |
| Lactem R 100 (3) | | | | | | 0.3 | | |
| Fat content (%) | | 21.0 | 15.0 | 15.6 | 15.8 | 15.1 | 19.2 | 19.2 |
| Results: | Firmness | + | - | + | ++ | ++ | - | + |
| | Creaminess | + | - | + | ++ | ++ | - | + |
| | Shape stability | + | - | + | ++ | ++ | - | + |

| | | | | | | | | |
|---|---|---|---|---|---|---|---|---|
| (1) Lactem P 22 contains approximately 98 % saturated lactylated emulsifier. (2) P Pel B is a monoglyceride which contains approximately 50 % cis-unsaturated emulsifier and 50 % saturated emulsifier. (3) Lactem R 100 contains about 80 % unsaturated lactylated emulsifier. | | | | | | | | |

From table 1 it can be concluded that lowering the fat content to 15 % and using a saturated emulsifier does not result in a stable whipped cream product. In contrast, an unsaturated emulsifier leads to a stable creamy product. A too low amount of unsaturated mono/diglycerides results in an unstable product with low creaminess and insufficient mouthfeel. The lactylated unsaturated emulsifier can be used at lower levels with the same effect. Furthermore it was noticed that the cream products were stable for at least 4 weeks at a maximum temperature of 7 °C.

### Example II: Mixed milk-based and vegetable fat cream

The components summarised in Table 2, other than the milk and cream, were dry blended. The blend was then thoroughly mixed with the milk and cream and the mixture homogenised at 80°C and 100/20 bar, pasteurised at 90°, cooled to 7°C, stored overnight at 7 °C and whipped to an overrun of 150% using a Mondomix (type A 05).

**Table 2**

| *Wt %* | | *Ref 1.* | *Ref. 2* | *Ex. IIA* | *Ex. IIB* | *Ex. IIC* | *Ex. IID* |
|---|---|---|---|---|---|---|---|
| Milk cream (40% fat) | | 39.4 | 24.5 | 24.4 | 24.4 | 24.4 | 31.9 |
| Coconut fat | | 5.0 | 5.0 | 5.0 | 5.0 | 5.0 | 5.0 |
| Skim milk | | 46.5 | 61.3 | 61.0 | 61.0 | 61.3 | 53.8 |
| Saccharose | | 8.0 | 8.0 | 8.0 | 8.0 | 8.0 | 8.0 |
| Gelatine 270 bloom | | 0.6 | 0.6 | 0.6 | 0.6 | 0.6 | 0.6 |
| Carrageenan | | 0.20 | 0.20 | 0.20 | 0.18 | 0.18 | 0.18 |
| Guar gum | | 0.15 | 0.15 | 0.15 | 0.15 | 0.15 | 0.15 |
| Lactem P 22 (1) | | 0.2 | 0.2 | | | | |
| P Pel B (2) | | | | 0.66 | 0.75 | | 0.4 |
| Lactem R100 (3) | | | | | | 0.3 | |
| Fat content | | 21.0 | 15.0 | 15.4 | 15.5 | 15.1 | 18.2 |
| Of which milk fat | | 15.8 | 9.8 | 9.8 | 9.8 | 9.8 | 12.8 |
| Results | Firmness | + | - | + | + | ++ | - |
| | Creaminess | + | - | + | ++ | ++ | - |
| | Shape stability | + | - | + | + | ++ | -- |

The results as shown in table 2 are comparable to those of example 1. The stability of the creams appeared to be at least 4 weeks at a maximum keeping temperature of 7 °C.

The experiments show that the amount of milk fat can be decreased substantially while maintaining stable cream properties, by using small amounts of unsaturated emulsifiers.

## Claims

1. A fat-based cream having a fat content of between 12 and 17 wt.% and containing a mono- or di-glyceride emulsifier, ***characterised* in that** at least 30% of the total fatty acid content of the emulsifier are unsaturated fatty acids and **in that** the cream contains between 0.1 and 2.0 wt.% of a mono- and/or di-glyceride containing at least one unsaturated fatty acid group.

2. The cream according to claim 1, which contains between 0.15 and 1.5 wt.% of said mono- and/or di-glyceride containing at least one unsaturated fatty acid group.

3. The cream according to claim 1 or 2, in which said mono- and/or di-glyceride containing at least one unsaturated fatty acid group contains one acetyl or preferably lactyl group per molecule.

4. The cream according to any one of the preceding claims, in which at least half of the fat is milk fat.

5. The cream according to any one of the preceding claims, which further contains between 0.5 and 6 wt.% of polysaccharides and proteins, such as milk proteins, gelatine, gums.

6. The cream according to any one of the preceding claims, which further contains between 5 and 12 wt.% of sugars, such as sucrose and lactose.

7. The cream according to any one of the preceding claims, which further contains between 0.1 and 1.5 wt.% of a saturated emulsifier.

8. The cream according to any one of the preceding claims, which exhibits an overrun of between 120 and 180% and/or a stability of at least 4 weeks at 7°C.

9. A composite food product comprising a cream phase and a distinct non-cream phase, wherein the cream phase is a cream according to any one of the preceding claims, said cream having a fat content of between 12 and 17 wt%, calculated on total weight of the cream phase.

10. Use of a mono- and/or di-glyceride containing at least one unsaturated fatty acid group as an emulsifier in a cream having 12 - 17 wt% fat.

## Patentansprüche

1. Sahne auf Fettbasis mit einem Fettgehalt zwischen 12 und 17 Gew.-% und enthaltend einen Mono- oder Diglyceridemulgator, **dadurch gekennzeichnet, dass** wenigstens 30% des gesamten Fettsäuregehalts des Emulgators ungesättigte Fettsäuren sind und dass die Sahne zwischen 0,1 und 2,0 Gew.-% eines Mono- und/oder Diglycerids enthaltend wenigstens eine ungesättigte Fettsäuregruppe enthält.

2. Sahne nach Anspruch 1, die zwischen 0,15 und 1,5 Gew.-% des Mono- und/oder Diglycerids enthaltend wenigstens eine ungesättigte Fettsäuregruppe enthält.

3. Sahne nach Anspruch 1 oder 2, wobei das Mono- und/oder Diglycerid enthaltend wenigstens eine ungesättigte Fettsäuregruppe eine Acetyl- oder bevorzugt Lactylgruppe pro Molekül enthält.

4. Sahne nach einem der vorangehenden Ansprüche, wobei wenigstens eine Hälfte des Fetts Milchfett ist.

5. Sahne nach einem der vorangehenden Ansprüche, die ferner zwischen 0,5 und 6 Gew.-% Polysaccharide und Proteine, wie Milchproteine, Gelatine, Gummis, enthält.

6. Sahne nach einem der vorangehenden Ansprüche, die ferner zwischen 5 und 12 Gew.-% Zucker, wie Saccharose und Lactose, enthält.

7. Sahne nach einem der vorangehenden Ansprüche, die ferner zwischen 0,1 und 1,5 Gew.-% eines gesättigten Emulgators enthält.

8. Sahne nach einem der vorangehenden Ansprüche, die einen Überlauf zwischen 120 und 180 % und/oder eine Stabilität von wenigstens 4 Wochen bei 7°C zeigt.

9. Verbundnahrungsmittelprodukt, umfassend eine Sahnephase und eine sich unterscheidende Nichtsahnephase, wobei die Sahnephase eine Sahne nach einem der vorangehenden Ansprüche ist, wobei die Sahne einen Fettgehalt zwischen 12 und 17 Gew.-%, berechnet auf Basis eines Gesamtgewichts der Sahnephase, aufweist.

10. Verwendung eines Mono- und/oder Diglycerids enthaltend wenigstens eine ungesättigte Fettsäuregruppe als einen Emulgator in einer Sahne mit 12 - 17 Gew.-% Fett.

## Revendications

1. Crème à base de matière grasse ayant une teneur en matière grasse comprise entre 12 et 17 % en poids et contenant un émulsifiant mono- ou diglycéride, **caractérisée en ce qu'**au moins 30 % de la teneur en acides gras totale de l'émulsifiant sont des acides gras insaturés et **en ce que** la crème contient entre 0,1 et 2,0 % en poids d'un mono- et/ou diglycéride contenant au moins un groupe acide gras insaturé.

2. Crème selon la revendication 1, qui contient entre 0,15 et 1,5 % en poids dudit mono- et/ou diglycéride contenant au moins un groupe acide gras insaturé.

3. Crème selon la revendication 1 ou 2, dans laquelle ledit mono- et/ou diglycéride contenant au moins un groupe acide gras insaturé contient un groupe acétyle ou de préférence lactyle par molécule.

4. Crème selon l'une quelconque des revendications précédentes, dans laquelle au moins la moitié de la matière grasse est de la matière grasse de lait.

5. Crème selon l'une quelconque des revendications précédentes, qui contient en outre entre 0,5 et 6 % en poids de polysaccharides et de protéines, tels que des protéines de lait, de la gélatine, des gommes.

6. Crème selon l'une quelconque des revendications précédentes, qui contient en outre entre 5 et 12 % en poids de sucres, tels que le saccharose et le lactose.

7. Crème selon l'une quelconque des revendications précédentes, qui contient en outre entre 0,1 et 1,5 % en poids d'un émulsifiant saturé.

8. Crème selon l'une quelconque des revendications précédentes, qui présente un dépassement compris entre 120 et 180 % et/ou une stabilité d'au moins 4 semaines à 7°C.

9. Produit alimentaire composite comprenant une phase crémeuse et une phase non crémeuse distincte, dans lequel la phase crémeuse est une crème selon l'une quelconque des revendications précédentes, ladite crème ayant une teneur en matière grasse comprise entre 12 et 17 % en poids, calculée par rapport au poids total de la phase crémeuse.

10. Utilisation d'un mono- et/ou diglycéride contenant au moins un groupe acide gras insaturé en tant qu'émulsifiant dans une crème ayant 12 à 17 % en poids de matière grasse.
